# EUROPÄISCHE PATENTANMELDUNG

(11) **EP 1 009 209 A2**
(43) Veröffentlichungstag der Anmeldung: **14.06.2000**
(21) Anmeldenummer: 99120624.4
(22) Anmeldetag: 18.10.1999
(51) Int. Cl.: H05K 7/14, H02G 5/00, H02J 11/00

(54) **Spannungsversorgung für einen Bus**

(30) Priorität: 30.10.1998 DE 19850124
(71) Anmelder: SIEMENS AKTIENGESELLSCHAFT, 80333 München (DE)
(72) Erfinder: Fichtner, Norbert, Dipl.-Ing. (FH), 84069 Schierling (DE); Luber, Georg, Dipl.-Ing. (FH), 93158 Teublitz (DE); Ott, Hans, Ing. (grad.), 93053 Regensburg (DE)

(57) **Zusammenfassung**

Busgerät (5) mit Schnittstelle (4) zu einem Bus (1,2), der Information und Energie für die Bordnetze von Busankopplern (3) führt, an deren Schnittstelle (4) Busgeräte (5) für Anwenderfunktionen anschließbar sind. Es ist vorgesehen, daß das Busgerät (5) mit einem Netzteil (6) zur Energieversorgung versehen ist, das größer als für einen Energiebedarf des Gerätes ausgelegt ist, wobei im Busgerät (5) eine Energiekoppelvorrichtung zur Schnittstelle (4) zu einem Busankoppler (3) vorgesehen ist.

## Beschreibung

Die Erfindung bezieht sich auf ein Busgerät mit Schnittstelle zu einem Bus, der Information und Energie für die Bordnetzversorgung von Busankopplern führt. An der Schnittstelle der Busankoppler zur Anwenderseite können Busgeräte für Anwenderfunktionen angeschlossen werden.

Üblicherweise werden Busankoppler bzw. ihre Elektronik über eine zentrale Spannungsversorgung betrieben. Bei wenigen Busankopplern bzw. sogenannten Teilnehmerstationen ist eine derartige Spannungsversorgung aufwendig und unwirtschaftlich.

Der Erfindung liegt die Aufgabe zugrunde, eine wirtschaftlichere Spannungsversorgung für einen Bus zu entwickeln.

Die Lösung der geschilderten Aufgabe erfolgt nach der Erfindung durch ein Busgerät nach Anspruch 1. Hierbei ist das Busgerät, also unter mehreren anwenderseitig vorgesehenen Busgeräten zumindest eines, mit einem Netzteil zur Energieversorgung versehen, das größer als für seinen Eigenbedarf des Gerätes ausgelegt ist, wobei im Busgerät eine Energieeinkoppelvorrichtung zur Schnittstelle zu einem Busankoppler vorgesehen ist. Die in Busankopplern für Information und Energie üblicherweise vorgesehenen Weichen werden hierbei für den Energietransport genutzt. Ein derartiges Busgerät ermöglicht es, je nach seiner Auslegung auch nur wenige Busankoppler wirtschaftlich mit Bordnetzenergie zu versorgen. Mehrere Busgeräte mit Netzteil können im Bedarfsfall auch parallel eingesetzt werden, wobei für diesen Anwendungsfall für Parallelbetrieb von Energieversorgern übliche Entkopplungen vorzusehen sind.

Insbesondere kann das Netzteil an seinem Spannungsausgang kurzschlußfest ausgelegt sein, um auch bei Kurzschlüssen auf dem Bus sicherzustellen, daß weder der Bus noch das Netzteil beschädigt werden. Es ist weiter vorteilhaft, das Netzteil mit Schutzeinrichtungen zur Vermeidung einer Störung der Informationsübertragung zu versehen. Diese Schutzeinrichtungen können im Netzteil oder außerhalb angeordnet sein.

Für offene Systeme, wobei der Bus an seinen Enden nicht abgeschlossen ist, ist es vorteilhaft, das Netzteil mit zumindest einem Bauteil zur Erhöhung der dynamischen Ausgangsimpedanz zum Bus hin zu versehen, das auf die vorgesehenen Buslängen abgestimmt ist.

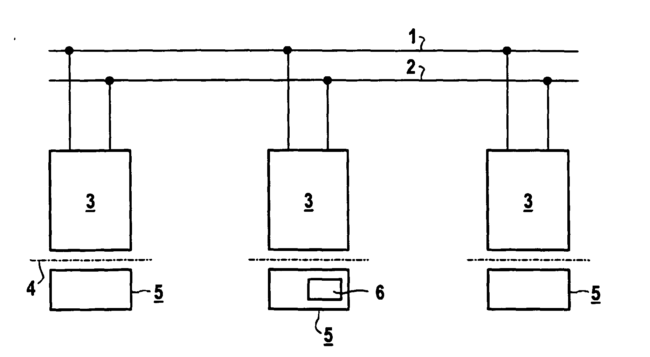

Die Erfindung soll nun anhand eines in der Zeichnung grob schematisch wiedergegebenen Ausführungsbeispiels näher erläutert werden:

Das veranschaulichte Bussystem kann insbesondere als Bus der EIBA, European Installation Bus Association, verstanden werden. An einem Bus mit den Leitern 1, 2 können Busankoppler 3 angeschlossen sein. An Schnittstellen 4 vom Busankoppler 3 zu einem Busgerät 5 können Busgeräte 5 angeschlossen werden. In zumindest einem Busgerät 5 ist ein Netzteil 6 angeordnet. Das Netzteil 6 versorgt die Elektronik in Buskomponenten, wie Busankoppler 3 und Busgerät 5, mit Spannung bzw. Energie für ihr jeweiliges Bordnetz. Verständlicherweise ist es unerheblich, ob die Buskomponenten für die Informationsübertragung bzw. Signalübertragung einerseits und für die Kleinspannungsversorgung für die Bordnetzenergie andererseits über ein gemeinsames Adernpaar 1, 2 oder über getrennte Adern arbeiten. Ebenso kann das Netzteil entweder im Busgerät oder außerhalb des Busgerätes angeordnet sein. Durch Parallelschalten mehrerer Busgeräte mit Netzteil können auch größere Anlagen ohne eine zentrale Busspannungsversorgung aufgebaut werden.

Insbesondere kann das Netzteil bzw. können die Netzteile kurzschlußfest ausgeführt sein. Ohnehin ist es vorteilhaft und auch üblich, allgemein Buskomponenten, auch ohne interne Versorgung durch ein Netzteil, kurzschlußfest auszuführen, um eine Eigengefährdung und eine Gefährdung des Busses im Falle eines versehentlichen Kurzschlusses zu vermeiden. Es ist günstig, hinsichtlich der Informationsübertragung die Netzteile hochohmig auszuführen, so daß auch beim Zusammenschalten mehrerer Busgeräte mit Netzteil die Informationsübertragung bzw. Signalübertragung nicht beeinträchtigt wird.

Im einfachsten Fall besteht ein Busgerät aus der anwenderseitigen Hardware, z.B. einem Relais mit Ansteuerschaltung, wobei der Busankoppler üblicherweise die Software enthält.

Das Busgerät kann auch ein Bauteil zur Erhöhung der dynamischen Ausgangsimpedanz enthalten, um auch bei einem offenen Bus, der also an seinen Enden nicht abgeschlossen ist, günstige Übertragungsverhältnisse sicherzustellen. Verständlicherweise kann das Bauteil zur Erhöhung der dynamischen Ausgangsimpedanz auch außerhalb des Busgerätes vorgesehen sein. Beides wird hier unter 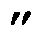 versehen" verstanden.

## Patentansprüche

1. Busgerät (5) mit Schnittstelle (4) zu einem Bus (1,2), der Information und Energie für die Bordnetze von Busankopplern (3) führt, an deren Schnittstelle (4) Busgeräte (5) für Anwenderfunktionen anschließbar sind, **dadurch gekennzeichnet,** daß das Busgerät (5) mit einem Netzteil (6) zur Energieversorgung versehen ist, das größer als für einen Energiebedarf des Gerätes ausgelegt ist, wobei im Busgerät (5) eine Energiekoppelvorrichtung zur Schnittstelle (4) zu einem Busankoppler (3) vorgesehen ist.

2. Busgerät nach Anspruch 1, **dadurch gekennzeichnet,** daß das Netzteil (6) an seinen Spannungsausgängen kurzschlußfest ausgelegt ist.

3. Busgerät nach Anspruch 1 oder 2, **dadurch gekennzeichnet,** daß das Netzteil (6) mit Schutzeinrichtungen zur Vermeidung einer Störung der Informationsübertragung versehen ist.

4. Busgerät nach einem der vorhergehenden Ansprüche, **dadurch gekennzeichnet,** daß das Netzteil (6) mit zumindest einem Bauteil zur Erhöhung der dynamischen Ausgangsimpedanz zum Bus (1,2) hin versehen ist.
